# EUROPEAN PATENT APPLICATION

(11) **EP 4 372 832 A2**
(43) Date of publication of application: **22.05.2024**
(21) Application number: 23210468.7
(22) Date of filing: 16.11.2023
(51) Int. Cl.: H01M 4/02, H01M 4/131, H01M 4/133, H01M 10/0525, H01M 10/0567, H01M 10/0568, H01M 10/0569

(54) **LITHIUM SECONDARY BATTERY**

(30) Priority: 18.11.2022 KR 20220155833
(71) Applicant: SK On Co., Ltd., Seoul 03161 (KR)
(72) Inventor: KIM, Eun Jin, 34124 Daejeon (KR); PARK, You Kyung, 34124 Daejeon (KR); SEO, Jung Hyun, 34124 Daejeon (KR); CHO, Eun Sam, 34124 Daejeon (KR); HWANG, Jeong Tae, 34124 Daejeon (KR); LEE, Mi Ryeong, 34124 Daejeon (KR); LEE, Yoon Ji, 34124 Daejeon (KR)
(74) Representative: Stolmár & Partner Patentanwälte PartG mbB

(57) **Abstract**

A lithium secondary battery includes an anode including an anode active material that contains carbon-based active material particles having a Brunauer-Emmett-Teller (BET) specific surface area of 3.0 m²/g to 5.0 m²/g and an average particle diameter (D50) of 5 µm to 7.5 µm, a cathode facing the anode, and a non-aqueous electrolyte solution including a non-aqueous organic solvent that contains a propionate-based organic solvent and a lithium salt. A content of the propionate-based organic solvent is 55 vol% or more based on a total volume of the non-aqueous organic solvent.

## Description

### BACKGROUND

### 1. Field

The disclosure of this patent document relates to a lithium secondary battery.

### 2. Description of the Related Art

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as a power source of an eco-friendly vehicle such as a hybrid vehicle.

A lithium secondary battery is actively developed and applied due to high operational voltage and energy density per unit weight, a high charging rate, a compact dimension, etc.

For example, the lithium secondary battery may include an electrode assembly including a cathode, an anode and a separation layer (separator) interposed between the cathode and the anode, and an electrolyte solution immersing the electrode assembly. The lithium secondary battery may further include an outer case having, e.g., a pouch shape for accommodating the electrode assembly and the electrolyte solution.

For example, the lithium secondary battery having high power properties may be used as a power source for the eco-friendly car. However, the power or life-span properties of the lithium secondary battery may be relatively deteriorated depending on physical properties of the electrolyte solution and an active material.

### SUMMARY

According to an aspect of the present disclosure, there is provided a lithium secondary battery having improved power properties.

A lithium secondary battery includes an anode including an anode active material that contains carbon-based active material particles having a Brunauer-Emmett-Teller (BET) specific surface area of 3.0 m²/g to 5.0 m²/g and an average particle diameter (D50) of 5 µm to 7.5 µm, a cathode facing the anode, and a non-aqueous electrolyte solution including a non-aqueous organic solvent that contains a propionate-based organic solvent and a lithium salt. A content of the propionate-based organic solvent is 55 vol% or more based on a total volume of the non-aqueous organic solvent.

In some embodiments, the cathode may include a cathode current collector, and a cathode active material layer disposed on at least one surface of the cathode current collector. The cathode active material layer may include lithium-transition metal oxide particles having an average particle diameter (D50) of 2.5 µm to 3.5 µm. In some implementations, the term "cathode current collector" may be used to indicate a component in a lithium secondary battery that collects electrons from the cathode and connects them to external circuits.

In some embodiments, the lithium-transition metal oxide particles may have a BET specific surface area of 1.0 m²/g to 1.7 m²/g.

In some embodiments, the cathode active material layer may further include maleic acid, and a content of maleic acid may be in a range from 0.02 wt% to 0.05 wt% based on a total weight of the cathode active material layer.

In some embodiments, the lithium-transition metal oxide particles may contain nickel.

In some embodiments, the carbon-based active material particles may include at least one selected from the group consisting of artificial graphite, natural graphite and hard carbon.

In some embodiments, the content of the propionate-based organic solvent may be in a range from 55 vol% to 80 vol% based on the total volume of the non-aqueous organic solvent.

In some embodiments, the propionate-based organic solvent may include at least one selected from the group consisting of methyl propionate, ethyl propionate and propyl propionate.

In some embodiments, the non-aqueous organic solvent may further include at least one selected from the group consisting of a carbonate-based solvent, an ester-based solvent, an ether-based solvent, a ketone-based solvent, an alcohol-based solvent and an aprotic solvent.

In some embodiments, the lithium salt may include at least one selected from the group consisting of lithium tetrafluoroborate (LiBF₄), lithium hexafluorophosphate (LiPF₆) and lithium difluorophosphate (LiPO₂F₂).

In some embodiments, the non-aqueous electrolyte solution may further include an additive including at least one selected from the group consisting of an alkyl sultone-based compound and an alkenyl sultone-based compound.

In some embodiments, the additive may further include at least one selected from the group consisting of polyethylene sulfide, vinylene carbonate, vinylethylene carbonate and ethylene sulfate.

According to an embodiment of the present disclosure, a sufficient specific surface area of carbon-based active material particles may be obtained, resistance may be reduced, and capacity retention during repeated charging and discharging may be improved. Accordingly, power and life-span properties of a lithium secondary battery may be improved.

According to an embodiment of the present disclosure, maleic acid may stabilize a viscosity of a cathode slurry, so that a formation of a cathode active material layer may be easily performed.

According to an embodiment of the present disclosure, the power properties of the lithium secondary battery may be sufficiently enhanced.

The lithium secondary battery of the present disclosure may be widely applied in green technology fields such as an electric vehicle, a battery charging station, a solar power generation, a wind power generation, etc., using a battery. The lithium secondary battery according to the present disclosure may be used for eco-friendly electric vehicles and hybrid vehicles to prevent a climate change by suppressing air pollution and greenhouse gas emission.

### BRIEF DESCRIPTION OF THE DRAWINGS

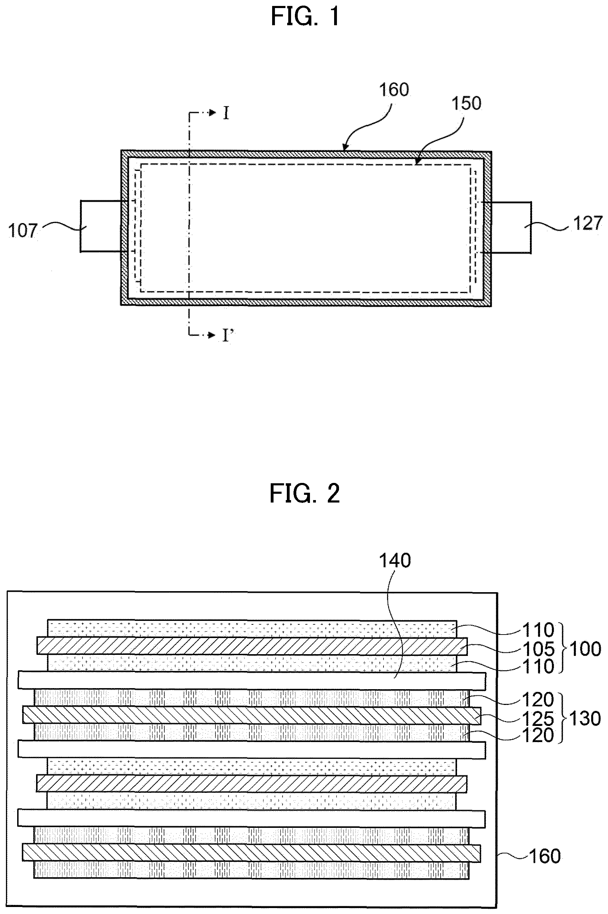

FIGS. 1 and 2 are a schematic plan view and a schematic cross-sectional view, respectively, illustrating a lithium secondary battery in accordance with example embodiments.

### DETAILED DESCRIPTION OF THE EMBODIMENTS

According to embodiments of the present disclosure, a lithium secondary battery including a cathode, an anode and a non-aqueous electrolyte solution is provided.

Hereinafter, a lithium secondary battery according to the present disclosure will be described in more detail with reference to embodiments and accompanying drawings.

FIGS. 1 and 2 are a schematic plan view and a schematic cross-sectional view, respectively, illustrating a lithium secondary battery in accordance with example embodiments. For example, FIG. 2 is a cross-sectional view taken along a line I-I' of FIG. 1.

Referring to FIGS. 1 and 2, a lithium secondary battery includes an anode 130including an anode active material, and a cathode 100 facing the anode 130.

For example, the anode 130 may include an anode current collector 125 and an anode active material layer 120 being disposed on at least one surface of the anode current collector 125 and containing the anode active material.

For example, the anode current collector 125 may include a copper foil, a nickel foil, a stainless steel foil, a titanium foil, a nickel foam, a copper foam, a polymer substrate coated with a conductive metal, etc. These may be used alone or in a combination of two or more therefrom. For example, a thickness of the anode current collector 125 may be in a range from 10 µm to 50 µm.

The anode active material includes a carbon-based active material particles. The anode active material may include a plurality of carbon-based active material particles.

A BET specific surface area of the carbon-based active material particlesis in a range from 3.0 m²/g to 5.0 m²/g, and an average particle diameter (D50) of the carbon-based active material particles is in a range from 5 µm to 7.5 µm. Within the above range, a sufficient specific surface area may be achieved and a resistance may be reduced while improving a capacity retention during repeated charging and discharging. Accordingly, power and life-span properties of the lithium secondary battery may be improved.

For example, within the ranges of the BET specific surface area and the average particle diameter of the carbon-based active material particles, the anode active material may be sufficiently loaded in the formation of the anode active material layer 120, thereby improving an anode density. Accordingly, a high-power and high-capacity lithium secondary battery may be implemented.

The terms "average particle diameter," "D50," and/or "average particle diameter (D50)" as used herein refer to a diameter at a volume cumulative percentage of 50% from a particle size distribution (PSD) obtained from a particle volume.

For example, as the average particle diameter decreases, the BET specific surface area may increase.

For example, the BET specific surface area of the carbon-based active material particles may be adjusted based on factors such as a detailed particle shape and a classification degree in addition to the average particle diameter. Therefore, even though the average particle diameters of two different carbon-based active material particles are the same, the BET specific surface area may become different.

Additionally, the BET specific surface area of the carbon-based active material particles having a relatively small average particle diameter may be smaller than the BET specific surface area of the carbon-based active material particles having a relatively large average particle diameter. Further, the BET specific surface area of the carbon-based active material particles having a relatively large average particle diameter may be larger than the BET specific surface area of the carbon-based active material particles having a relatively small average particle diameter.

In example embodiments, both the BET specific surface area and average particle diameter may be controlled to improve the power, capacity and life-span properties of the lithium secondary battery.

In some embodiments, the carbon-based active material particles may include at least one selected from the group consisting of artificial graphite, natural graphite and hard carbon.

In some embodiments, the anode active material may further include at least one selected from the group consisting of a lithium alloy, a silicon-based compound and tin.

For example, a constituent element of the lithium alloy may include at least one selected from the group consisting of aluminum, zinc, bismuth, cadmium, antimony, silicon, lead, tin, gallium and indium.

For example, the silicon-based compound may include at least one selected from the group consisting of silicon oxide and a silicon-carbon composite compound including silicon carbide (SiC).

A content of the carbon-based active material particles may be 50 wt% or more based on a total weight of the anode active material. In some embodiments, the content of the carbon-based active material particles may be 60 wt% or more, 70 wt% or more, 80 wt% or more, or 90 wt% or more based on the total weight of the anode active material.

In an embodiment, the anode active material may substantially consist of the carbon-based active material particles.

An anode slurry may be prepared by mixing the anode active material in a solvent. The anode slurry may be coated/deposited on the anode current collector 125, and then dried and pressed to form the anode active material layer. The coating may include a gravure coating, a slot die coating, a multi-layer simultaneous die coating, an imprinting, a doctor blade coating, a dip coating, a bar coating, a casting, etc.

The anode active material layer 120 may further include a binder, and optionally may further include a conductive material, a thickener, etc.

A non-aqueous solvent may be used as the solvent. For example, the solvent may include N-methyl-2-pyrrolidone (NMP), dimethylformamide, dimethylacetamide, N,N-dimethylaminopropylamine, ethylene oxide, tetrahydrofuran, etc.

For example, the binder may include polyvinylidenefluoride (PVDF), vinylidene fluoride-hexafluoropropylene copolymer, polyacrylonitrile, polymethylmethacrylate, acrylonitrile butadiene rubber (NBR), polybutadiene rubber (BR), styrene-butadiene rubber (SBR), etc. These can be used alone or in a combination of two or more therefrom.

In some embodiments, the binder for forming the anode may include, e.g., an aqueous binder such as styrene-butadiene rubber (SBR) for a compatibility with the carbon-based active material particles, may be used together with the thickener such as carboxymethyl cellulose (CMC).

For example, the conductive material may be included to promote electron transfer between active material particles. For example, the conductive material may include a carbon-based conductive material such as graphite, carbon black, acetylene black, Ketjen black, graphene, carbon nanotube, a VGCF (vapor-grown carbon fiber), a carbon fiber, etc., and/or a metal-based conductive material such as tin, tin oxide, a perovskite material such as titanium oxide, LaSrCoO₃, LaSrMnO₃, etc. These may be used alone or in a combination of two or more therefrom.

In example embodiments, the cathode 100 may include a cathode current collector 105 and a cathode active material layer 110 disposed on at least one surface of the cathode current collector 105.

The cathode current collector 105 may include stainless steel, nickel, aluminum, titanium, or an alloy thereof. The cathode current collector 105 may include aluminum or stainless steel surface-treated with carbon, nickel, titanium or silver. For example, a thickness of the cathode current collector 105 may be in a range from 10 µm to 50 µm.

The cathode active material layer 110 may include a cathode active material including lithium-transition metal oxide particles having an average particle diameter (D50) from 2.5 µm to 3.5 µm, and a BET specific surface area from 1.0 m²/g to 1.7 m²/g. Within the above range, a sufficient specific surface area may be achieved and a resistance may be reduced while improving the capacity retention during repeated charging and discharging. Accordingly, the power and life-span properties of the lithium secondary battery may be improved.

For example, within the ranges of the BET specific surface area and the average particle diameter of the lithium-transition metal oxide particles, the cathode active material may be sufficiently loaded in the formation of the cathode active material layer 110, thereby improving a cathode density. Thus, the high-power and high-capacity lithium secondary battery may be implemented.

For example, the relationship between the BET specific surface area and average particle diameter in the carbon-based active material particles as described above may also be applied to the relationship between the BET specific surface area and average particle diameter in the lithium-transition metal oxide particles.

In some embodiments, the anode active material that includes the carbon-based active material particles having the BET specific surface area of 3.0 m²/g to 5.0 m²/g and the average particle diameter of 5 µm to 7.5 µm, and the cathode active material that includes the lithium-transition metal oxide particles having the BET specific surface area of 1.0 m²/g to 1.7 of m²/g and the average particle diameter of 2.5 µm to 3.5 µm may be used together. Accordingly, the power and life-span properties of the lithium secondary battery may be further improved.

For example, the lithium-transition metal oxide particles may have a single crystalline structure or a polycrystalline structure in a crystallographic aspect.

For example, the lithium-transition metal oxide particle may include nickel (Ni), and may further include at least one of cobalt (Co) or manganese (Mn).

For example, the lithium-transition metal oxide particle may include a layered structure or a crystal structure represented by Chemical Formula 1.

[Chemical Formula 1] LiₓNiₐM_{b}O_{2+z}

In Chemical Formula 1, 0.9≤x≤1.2, 0.6≤a≤0.99, 0.01≤b≤0.4, and -0.5≤z≤0.1. As mentioned above, M may include Co, Mn and/or Al.

The chemical structure represented by Chemical Formula 1 indicates a bonding relationship included in the layered structure or the crystal structure of the cathode active material, and is not intended to exclude another additional element. For example, M includes Co and/or Mn, and Co and/or Mn may serve as main active elements of the cathode active material together with Ni. Chemical Formula 1 is provided to express the bonding relationship of the main active elements, and is to be understood as a formula encompassing introduction and substitution of the additional element.

In an embodiment, an auxiliary element for enhancing chemical stability of the cathode active material or the layered structure/crystal structure may be further included in addition to the main active element. The auxiliary element may be incorporated into the layered structure/crystal structure to form a bond, and it is to be understood that this case is also included within the chemical structure represented by Chemical Formula 1.

The auxiliary element may include at least one selected from the group consisting of, e.g., Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. The auxiliary element may act as an auxiliary active element such as Al which may contribute to capacity/power activity of the cathode active material together with Co or Mn.

For example, the cathode active material or the lithium-transition metal oxide particle may have a layered structure or a crystal structure represented by Chemical Formula 1-1 below.

[Formula 1-1] LiₓNiₐM1_{b1}M2_{b2}O_{2+z}

In Chemical Formula 1-1, M1 may include Co, Mn and/or Al. M2 may include the above-described auxiliary element. In Chemical Formula 1-1, 0.9≤x≤1.2, 0.6≤a≤0.99, 0.01≤b1+b2≤0.4, and -0.5≤z≤0.1.

The cathode active material may further include a coating element or a doping element. For example, an element substantially the same as or similar to the above-mentioned auxiliary element may be used as the coating element or the doping element. For example, one of the above elements or a combination of two or more therefrom may be used as the coating element or the doping element.

The coating element or the doping element may be present on a surface of the lithium-nickel metal oxide particle or may penetrate through the surface of the lithium-transition metal oxide particle to be included in the bonding structure represented by Chemical Formula 1 or Chemical Formula 1-1.

The cathode active material may include a nickel-cobalt-manganese (NCM)-based lithium oxide. In this case, an NCM-based lithium oxide having an increased nickel content may be used.

Ni may serve as a transition metal related to power and capacity of a lithium secondary battery. Therefore, as described above, a high-Ni composition may be employed for the cathode active material, so that a high-capacity cathode and a high-capacity lithium secondary battery may be implemented.

However, as the content of Ni increases, long-term storage stability and life-span stability of the cathode or the secondary battery may be relatively deteriorated, and side reactions with an electrolyte may be also increased. However, according to example embodiments, life-span stability and capacity retention may be improved by Mn while maintaining electrical conductivity by the inclusion of Co.

A Ni content (e.g., a mole fraction of nickel among total moles of nickel, cobalt and manganese) in the NCM-based lithium oxide may be 0.6 or more, 0.7 or more, or 0.8 or more. In some embodiments, the Ni content may be from 0.8 to 0.95, from 0.82 to 0.95, from 0.83 to 0.95, from 0.84 to 0.95, from 0.85 to 0.95, or from 0.88 to 0.95.

A content of the above-described lithium-transition metal oxide particles may be 50 wt% or more based on a total weight of the cathode active material. In some embodiments, the content of lithium-transition metal oxide particles may be 60 wt% or more, 70 wt% or more, 80 wt% or more, or 90 wt% or more based on the total weight of the cathode active material.

In an embodiment, the cathode active material may substantially consist of the lithium-transition metal oxide particles.

A cathode slurry may be prepared by mixing the cathode active material in a solvent. The cathode slurry may be coated on at least one surface of the cathode current collector 105, and then dried and pressed to form the cathode active material layer 110. The coating may include a gravure coating, a slot die coating, a multi-layer simultaneous die coating, an imprinting, a doctor blade coating, a dip coating, a bar coating, a casting, etc. The cathode active material layer 110 may further include a binder, and may optionally further include a conductive material, a thickener, etc.

For example, when a cathode active material having a small particle diameter is used, a viscosity of the cathode slurry may become unstable, and the cathode active material layer 110 may not be easily formed.

In some embodiments, the cathode active material layer 110 may further include maleic acid (MA). Maleic acid may stabilize the viscosity of the cathode slurry so that the cathode active material layer 110 may be uniformly formed.

For example, maleic acid may be included in the cathode active material layer 110 by adding maleic acid to the cathode slurry.

In some embodiments, a content of maleic acid may be in a range from 0.02 wt% to 0.05 wt% based on a total weight of the cathode active material layer 110. Within the above range, process properties may be improved while preventing a reduction of a cathode density.

The solvent, the binder and the conductive material may include materials substantially the same as or similar to those described above as the anode solvent, the anode binder and the anode conductive material.

In one embodiment, a PVDF-based binder may be used as a binder for forming the cathode. In this case, an amount of the binder for forming the cathode active material layer 110 may be reduced and an amount of the cathode active material may be relatively increased. Accordingly, the power and capacity properties of the secondary battery may be improved.

A separator 140 may be interposed between the cathode 100 and the anode 130. An electrical short circuit between the cathode 100 and the anode 130 may be prevented by the separator 140 while generating an ion flow. For example, a thickness of the separator may be in a range from 10 µm to 20 µm.

For example, the separator 140 may include a porous polymer film or a porous non-woven fabric.

The porous polymer film may include a polyolefin-based polymer such as an ethylene polymer, a propylene polymer, an ethylene/butene copolymer, an ethylene/hexene copolymer, an ethylene/methacrylate copolymer. These may be used alone or in a combination of two or more therefrom.

The porous non-woven fabric may include a high melting point glass fiber, a polyethylene terephthalate fiber, etc.

The separator 140 may include a ceramic-based material. For example, inorganic particles may be coated on the polymer film or dispersed in the polymer film to improve a heat resistance.

The separator 140 may have a single-layered or multi-layered structure including the polymer film and/or the non-woven fabric as described above.

In some embodiments, an area (e.g., a contact area with the separator 140) and/or a volume of the anode 130 may be larger than that of the cathode 100. Accordingly, transfer of lithium ions generated in the cathode 100 may be facilitated to the anode 130 without being precipitated.

For example, an electrode cell may be defined by a cathode 100, an anode 130 and the separator 140, and a plurality of the electrode cells may be stacked to form an electrode assembly 150 in the form of, e.g., a jelly roll. For example, the electrode assembly 150 may be formed by winding, stacking, zigzag folding, stack-folding, etc., of the separator 140.

The electrode assembly 150 may be accommodated with an electrolyte solution in the case 160 to define a lithium secondary battery. In example embodiments, a non-aqueous electrolyte solution may be used as the electrolyte solution.

The non-aqueous electrolyte solution may contain a lithium salt and a non-aqueous organic solvent including a propionate-based organic solvent. For example, the propionate-based organic solvent may have low viscosity and density and high ionic conductivity, so that the power properties of the lithium secondary battery may be improved.

A content of the propionate-based organic solvent is 55 vol% or more based on a total volume of the non-aqueous organic solvent. In some embodiments, the content of the propionate-based organic solvent may be in a range from 55 vol% to 80 vol%. Within the above range, the power properties of the lithium secondary battery may be sufficiently improved while maintaining or improving chemical stability of the non-aqueous electrolyte solution

In some embodiments, the propionate-based organic solvent may include at least one selected from the group consisting of methyl propionate (MP), ethyl propionate (EP) and propyl propionate.

In some embodiments, the non-aqueous organic solvent may further include at least one selected from the group consisting of a carbonate-based solvent, an ester-based solvent, an ether-based solvent, a ketone-based solvent, an alcohol-based solvent and an aprotic solvent. These may be used alone or in a combination of two or more therefrom.

For example, the carbonate-based solvent may include at least one selected from the group consisting of dimethyl carbonate (DMC), ethyl methyl carbonate (EMC), methyl propyl carbonate, ethyl propyl carbonate, diethyl carbonate (DEC), dipropyl carbonate, propylene carbonate (PC), ethylene carbonate (EC) and butylene carbonate.

For example, the ester-based solvent may include at least one selected from the group consisting of methyl acetate (MA), ethyl acetate (EA), propyl acetate (PA), 1,1-dimethylethyl acetate (DMEA), gamma-butyrolactone (GBL), decanolide, valerolactone, mevalonolactone and caprolactone.

For example, the ether-based solvent may include at least one selected from the group consisting of dibutyl ether, tetraethylene glycol dimethyl ether (TEGDME), diethylene glycol dimethyl ether (DEGDME), dimethoxyethane, tetrahydrofuran (THF) and 2-methyltetrahydrofuran.

For example, the ketone-based solvent may include cyclohexanone.

For example, the alcohol-based solvent may include at least one of ethyl alcohol and isopropyl alcohol.

For example, the aprotic solvent may include at least one selected from the group consisting of a nitrile-based solvent, an amide-based solvent (e.g., dimethylformamide), a dioxolane-based solvent (e.g., 1,3-dioxolane) and a sulfolane-based solvent.

In example embodiments, the lithium salt may serve as an electrolyte. For example, the lithium salt may be expressed as Li⁺X⁻.

For example, the anion X' of the lithium salt may include F', Cl⁻, Br⁻, I⁻, NO₃⁻, N(CN)₂⁻, BF₄⁻, ClO₄⁻, PF₆⁻, SbF₆⁻, AsF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, PO₂F₂⁻, etc.

In some embodiments, the lithium salt may include at least one of lithium tetrafluoroborate (LiBF₄), lithium hexafluorophosphate (LiPF₆) and lithium difluorophosphate (LiPO₂F₂). In this case, thermal stability of a film formed on an electrode surface may be improved. Accordingly, ionic conductivity and electrode protection properties of the non-aqueous electrolyte solution may be improved.

In an embodiment, the lithium salt may be included at a concentration of about 0.01 M to 5 M, or about 0.01 M to 2 M in the non-aqueous organic solvent. Within the above range, transfer of lithium ions and/or electrons may be promoted during charging and discharging of the lithium secondary battery, thereby improving the capacity properties.

According to some embodiments, the non-aqueous electrolyte solution may further include an additive including at least one selected from the group consisting of an alkyl sultone-based compound and an alkenyl sultone-based compound.

For example, the alkyl sultone-based compound may include at least one selected from the group consisting of 1,3-propane sultone (PS) and 1,4-butane sultone (1,4-butane sultone).

For example, the alkenyl sultone compound may include at least one selected from the group consisting of ethene sultone, 1,3-propene sultone (PRS), 1,4-butene sultone. and 1-methyl-1,3-propene sultone.

For example, the additive may further include an anhydride-based compound such as succinic anhydride, maleic anhydride and a nitrile-based compounds such as glutaronitrile, succinic acid nitrile and adiponitrile. These may be sued alone or in a combination of two or more therefrom in addition to the above-described sultone-based compound.

In an embodiment, the additive may further include at least one selected from the group consisting of polyethylene sulfide (PES), vinylene carbonate (VC), vinylethylene carbonate (VEC) and ethylene sulfate (ESA).

In some embodiments, a content of the additive may be in a range from 1.5 wt% to 4.5 wt% based on a total weight of the non-aqueous electrolyte solution. Within the above range, side reactions between the non-aqueous electrolyte solution and the cathode active material and/or between the non-aqueous electrolyte solution and the anode active material may be suppressed while suppressing excessive increase of a battery resistance. Accordingly, reduction of the power properties may be prevented while maintaining or improving the life-span properties of the lithium secondary battery.

As illustrated in FIG. 1, electrode tabs (a cathode tab and an anode tab) may protrude from the cathode current collector 105 and the anode electrode current collector 125 included in each electrode cell to one side of the case 160. The electrode tabs may be welded together with the one side of the case 160 to form an electrode lead (a cathode lead 107 and an anode lead 127) extending or exposed to an outside of the case 160.

The lithium secondary battery may be manufactured in, e.g., a cylindrical shape using a can, a square shape, a pouch shape or a coin shape.

Hereinafter, preferred examples are proposed to more concretely describe the present disclosure.

### Example 1

### (1) Cathode Formation

A mixed solution was prepared by adding NiSO₄, CoSO₄ and MnSO₄ to distilled water from which dissolved oxygen was removed in a molar ratio of 0.6:0.2:0.2.

The mixed solution was introduced into a reactor at 50 °C, and NaOH and NH₃H₂O were added as a precipitating agent and a chelating agent, respectively. Thereafter, coprecipitation reaction was performed for 72 hours to obtain Ni_{0.6}Co_{0.2}Mn_{0.2}(OH)₂ as a transition metal precursor. The transition metal precursor was dried at 100 °C for 12 hours, and then re-dried at 120 °C for 10 hours.

Lithium hydroxide and the transition metal precursor were added to a dry high-speed mixer at a molar ratio of 1.03: 1 and mixed uniformly for 20 minutes. The mixture was placed in a kiln and heated to 950°C at a ramping rate of 2°C/min, and maintained at 950°C for 12 hours.

Oxygen was continuously passed through the kiln at a flow rate of 10 mL/min during the temperature ramping and maintaining. After the firing, a natural cooling to room temperature, and then pulverizing and classification were performed.

Through the classification, lithium-transition metal oxide particles having an average particle diameter (D50) of 3.0 µm, a BET specific surface area of 1.3 m²/g, and a composition of LiNi_{0.6}Co_{0.2}Mn_{0.2}O₂ were prepared.

The BET specific surface area of the lithium-transition metal oxide particles was measured using TriStar II 3020 manufactured from Micromeritics.

The lithium-transition metal oxide particles were used as a cathode active material.

A cathode slurry was prepared by mixing the cathode active material, carbon black as a conductive material, and polyvinylidene fluoride (PVDF) as a binder in a weight ratio of 93:5:2. The cathode slurry was uniformly coated on a 15 µm-thick aluminum foil, vacuum dried at 130°C, and then pressed to form a cathode for a lithium secondary battery.

A loading amount of the cathode active material was adjusted in a range from 6.5 mg/cm² to 8.0 mg/cm² based on a cross section so that a cathode density after the pressing became 2.5 g/cc or more.

### (2) Anode Formation

An anode slurry containing 92.6 wt% of natural graphite as an anode active material, 5 wt% of graphite as a conductive material, 1.2 wt% of carboxymethyl cellulose (CMC) and 1.2 wt% of styrene-butadiene rubber (SBR) as a binder was prepared. The anode slurry was uniformly coated, dried and pressed on an 8 µm-thick copper foil to prepare an anode.

Through a classification, the average particle diameter (D50) and BET specific surface area of the natural graphite were adjusted to 6.0 µm and 4.1 m²/g, respectively.

A loading amount of the anode active material was adjusted in a range from 4 mg/cm² to 5 mg/cm² based on a cross section, so that an anode density after the pressing became 1.3 g/cc or more.

### (3) Preparation of Non-aqueous Electrolyte Solution

A 1.2 M LiPF6 solution was prepared using a mixed non-aqueous organic solvent of ethylene carbonate (EC)/ethyl propionate (EP) (25/75; volume ratio).

1 wt% of vinylene carbonate (VC), 1 wt% of 1,3-propane sultone (PS) and 1 wt% of ethylene sulfate (ESA) were added and mixed as an additive based on a total weight of a non-aqueous electrolyte solution to form the non-aqueous electrolyte solution.

### (4) Fabrication of Lithium Secondary Battery

The cathode and the anode prepared as described above were each notched by a predetermined size, and stacked with a separator (polyethylene, thickness: 20µm) interposed therebetween to form an electrode cell. Each tab portion of the cathode and the anode was welded.

The welded assembly of the cathode/separator/anode was inserted in a pouch, and three sides (sealing portion) of the pouch except for an electrolyte injection side were sealed. The tab portions were also included in the sealing portions. The electrolyte solution was injected through the electrolyte injection side, and then the electrolyte injection side was also sealed. Impregnation was performed for 12 hours or more to obtain a lithium secondary battery.

A pre-charging was performed with a current equivalent to 0.25C to a point of 25% of a capacity of the lithium secondary battery.

After 24 hours, degassing was performed, aging was performed for more than 18 hours, and a formation charging/discharging was performed (charging conditions: CC-CV 0.2C 4.2V 0.05C CUT-OFF, discharging conditions: CC 0.2C 2.5V CUT-OFF).

After the formation charging/discharging, a standard charging/discharging was performed at 25°C (charging conditions: CC-CV 1.0C 4.2V 0.05C CUT-OFF, discharging conditions: CC 1C 2.5V CUT-OFF).

### Examples 2 to 9 and 14 to 16, and Comparative Examples 1 to 6

A cathode, an anode, a non-aqueous electrolyte solution and a lithium secondary battery were fabricated by the same methods as those in Example 1, except that the BET specific surface area and the average particle diameter (D50) of each of the cathode and anode active materials, and the content of the propionate-based organic solvent based on the total volume of the non-aqueous organic solvent were adjusted as shown in Table 1 below.

### Example 10

A cathode, an anode, a non-aqueous electrolyte solution and a lithium secondary battery were fabricated by the same methods as those in Example 1, except that a mixed non-aqueous organic solvent of EC/methyl propionate (MP) (25/75; volume ratio) was used.

### Example 11

A cathode, an anode, a non-aqueous electrolyte solution and a lithium secondary battery were fabricated by the same methods as those in Example 1, except that a mixed non-aqueous organic solvent of EC/propyl propionate (PP) (25/75; volume ratio) was used.

### Examples 12 and 13

A cathode, an anode, a non-aqueous electrolyte solution and a lithium secondary battery were fabricated by the same methods as those in Example 1, except that maleic acid was added to the cathode slurry so that a maleic acid content based on a total weight of the cathode active material layer became as shown in Table 1 below.

The BET specific surface area and the average particle diameter (D50) of each of the cathode active material and the anode active material in Examples and Comparative Examples, the content of maleic acid based on the total weight of the cathode active material layer, and the content of the propionate-based organic solvent based on the total volume of the non-aqueous organic solvent are as shown in Table 1 below.

**[Table 1]**

| No. | anode active material | | cathode active material | | content of maleic acid (wt%) | content of propionate-based organic solvent (vol%) |
|---|---|---|---|---|---|---|
| | BET specific surface area (m²/g) | D50 (µm) | BET specific surface area (m²/g) | D50 (µm) | | |
| Example 1 | 4.1 | 6.0 | 1.3 | 3.0 | - | 75 |
| Example 2 | 4.8 | 5.0 | 1.3 | 3.0 | - | 75 |
| Example 3 | 3.1 | 7.5 | 1.3 | 3.0 | - | 75 |
| Example 4 | 4.1 | 6.0 | 1.6 | 2.6 | - | 75 |
| Example 5 | 4.1 | 6.0 | 1.1 | 3.5 | - | 75 |
| Example 6 | 4.1 | 6.0 | 1.7 | 2.4 | - | 75 |
| Example 7 | 4.1 | 6.0 | 1.0 | 3.7 | - | 75 |
| Example 8 | 4.1 | 6.0 | 0.9 | 3.5 | - | 75 |
| Example 9 | 4.1 | 6.0 | 1.8 | 2.5 | - | 75 |
| Example 10 | 4.1 | 6.0 | 1.3 | 3.0 | - | 75 |
| Example 11 | 4.1 | 6.0 | 1.3 | 3.0 | - | 75 |
| Example 12 | 4.1 | 6.0 | 1.3 | 3.0 | 0.02 | 75 |
| Example 13 | 4.1 | 6.0 | 1.3 | 3.0 | 0.04 | 75 |
| Example 14 | 4.1 | 6.0 | 1.3 | 3.0 | - | 55 |
| Example 15 | 4.1 | 6.0 | 1.3 | 3.0 | - | 80 |
| Example 16 | 4.1 | 6.0 | 1.3 | 3.0 | - | 85 |
| Comparative Example 1 | 2.0 | 9.0 | 1.3 | 3.0 | - | 75 |
| Comparative Example 2 | 5.0 | 4.8 | 1.3 | 3.0 | - | 75 |
| Comparative Example 3 | 3.0 | 7.7 | 1.3 | 3.0 | - | 75 |
| Comparative Example 4 | 2.8 | 7.4 | 1.3 | 3.0 | - | 75 |
| Comparative Example 5 | 5.1 | 5.0 | 1.3 | 3.0 | - | 75 |
| Comparative Example 6 | 4.1 | 6.0 | 1.3 | 3.0 | - | 50 |

### Experiment Example

### (1) Evaluation on initial efficiency

A charge capacity and a discharge capacity during the formation charging and discharging were measured for the lithium secondary batteries according to the above-described Examples and Comparative Examples.

An initial efficiency was evaluated as a percentage of the measured discharge capacity relative to the charge capacity.

### (2) Evaluation on room temperature power property

For the lithium secondary batteries according to the above-described Examples and Comparative examples, charging (CC-CV 1C 4.2V 0.02C CUT-OFF) and discharging (CC 1C 2.5V CUT-OFF) at room temperature (25°C) were performed after the formation charging and discharging, and a room temperature discharge capacity and a room temperature charge capacity were measured.

After charging the lithium secondary battery of each of Examples and Comparative Examples to 40% of a discharge capacity (SOC40%), a power of 1150 W was injected in a discharge direction and a time to reach a lower limit voltage (2.5 V) was measured..

After charging the lithium secondary battery of each of Examples and Comparative Examples to 70% of the discharge capacity (SOC70%), a power of 1032 W was injected in a charge direction and a time to reach an upper limit voltage (4.3 V) was measured..

The measured time to reach the lower limit voltage was divided by the time to reach the lower limit voltage of Comparative Example 1, and expressed as a percentage, to evaluate a room temperature discharge power.

The measure time to reach the upper limit voltage was divided by the time to reach the upper limit voltage of Comparative Example 1 and expressed as a percentage to evaluate as a room temperature charge power.

### (3) Evaluation on low temperature power property (-15 □)

A discharge capacity and a charge capacity were measured by the same method as that Experimental Example (2), except that the charge and discharge were performed in a chamber maintained at -15°C.

A discharge power property and a charge power property of each battery of Examples and Comparative Examples were evaluated by the same method as that in Experimental Example (2), except that a power of 462 W was injected for measuring a low-temperature discharge power and a power of 150 W was injected for measuring a low-temperature charge power.

### (4) Measurement of cold start maintenance voltage (-30 °C)

A cold start maintenance voltage measurement can be an evaluation on whether a vehicle can be started in an extremely low temperature.

After charging each lithium secondary battery of Examples and Comparative Examples to 30% of a discharge capacity (SOC30%), a power of 100 W was injected three times for 3 seconds at -30 °C to measure a lower limit of a voltage..

### (5) Measurement of capacity retention

Each lithium secondary battery of Examples and Comparative Examples were charged and discharged repeatedly 3000 times under the same conditions as those in Experimental Example (2). Specifically, the charging and discharging were repeated in a range from SOC40% to SOC80% at 41 °C with a current of 10C.

A discharge capacity measured at the 3000th cycle was divided by a discharge capacity measured at the 1st cycle and expressed as a percentage to evaluate a capacity retention.

**[Table 2]**

| No. | initial efficiency (%) | room temperature power property | | low temperature (-15 °C) power property | | cold start maintenance voltage (V) | capacity retention (%) |
|---|---|---|---|---|---|---|---|
| | | discharge power (%) | charge power (%) | discharge power (%) | charge power (%) | | |
| Example 1 | 86.9 | 137.5 | 162.5 | 162.2 | 421.2 | 2.69 | 90 |
| Example 2 | 87.2 | 138.2 | 163.1 | 162.8 | 422.5 | 2.70 | 88 |
| Example 3 | 86.2 | 135.9 | 160.5 | 161.0 | 418.3 | 2.67 | 92 |
| Example 4 | 87.1 | 138.0 | 162.8 | 162.7 | 422.1 | 2.70 | 87 |
| Example 5 | 86.0 | 134.8 | 159.2 | 159.6 | 415.3 | 2.65 | 92 |
| Example 6 | 87.5 | 139.2 | 164.7 | 164.4 | 425.0 | 2.72 | 85 |
| Example 7 | 85.2 | 133.1 | 157.0 | 157.3 | 411.9 | 2.64 | 93 |
| Example 8 | 85.3 | 133.3 | 156.8 | 157.7 | 413.0 | 2.66 | 92 |
| Example 9 | 87.3 | 138.9 | 164.3 | 164.1 | 423.8 | 2.71 | 86 |
| Example 10 | 86.8 | 137.7 | 161.6 | 162.4 | 422.5 | 2.69 | 89 |
| Example 11 | 86.8 | 137.4 | 161.7 | 161.2 | 420.8 | 2.70 | 89 |
| Example 12 | 86.9 | 137.2 | 160.9 | 162.3 | 421.1 | 2.70 | 90 |
| Example 13 | 87.0 | 136.6 | 160.4 | 159.4 | 420.5 | 2.69 | 91 |
| Example 14 | 86.4 | 135.7 | 160.1 | 161.3 | 418.5 | 2.67 | 91 |
| Example 15 | 87.2 | 138.5 | 163.4 | 161.7 | 420.3 | 2.71 | 87 |
| Example 16 | 87.4 | 139.3 | 164.0 | 162.4 | 421.2 | 2.72 | 84 |
| Comparative Example 1 | 83.4 | 100.0 | 100.0 | 100.0 | 100.0 | 2.51 | 94 |
| Comparative Example 2 | 87.2 | 138.0 | 162.0 | 160.7 | 420.9 | 2.68 | 79 |
| Comparative Example 3 | 84.9 | 133.5 | 157.2 | 158.1 | 410.4 | 2.65 | 93 |
| Comparative Example 4 | 85.0 | 133.7 | 158.0 | 158.5 | 412.0 | 2.64 | 93 |
| Comparative Example 5 | 87.1 | 137.3 | 162.5 | 160.9 | 421.1 | 2.69 | 80 |
| Comparative Example 6 | 84.7 | 132.1 | 156.0 | 156.9 | 408.8 | 2.63 | 94 |

Referring to Table 2, in Examples where the carbon-based active material particles having the BET specific surface area of 3.0 m²/g to 5.0 m²/g and the average particle diameter (D50) of 5 µm to 7.5 µm were used together with the non-aqueous electrolyte solution in which the content of the propionate-based organic solvent content was 55 vol% or more based on the total volume of the non-aqueous organic solvent, improved initial efficiency, power properties at room temperature and low temperature, cold start maintenance voltage and capacity retention were obtained compared to those from Comparative Examples.

In Example 6 where the average particle diameter of the lithium-transition metal oxide particles was less than 2.5 µm, the life-span properties were lowered relatively to those from other Examples.

In Example 7 where the average particle diameter of the lithium-transition metal oxide particles exceeded 3.5 µm, the power properties were lowered relatively to those from other Examples.

In Example 8 where the BET specific surface area of the lithium-transition metal oxide particles was less than 1.0 m²/g, the power properties were lowered relatively to those from other Examples.

In Example 9 where the BET specific surface area of the lithium-transition metal oxide particles exceeded 1.7 m²/g, the life-span properties were lowered relatively to those from other Examples.

In Examples 12 and 13 where maleic acid was added to the cathode active material layer, a viscosity of the cathode slurry was stabilized, and thus a defect ratio during the process was relatively reduced.

In Example 16 where the content of the propionate-based organic solvent based on the total volume of the non-aqueous organic solvent exceeded 80 vol%, the life-span properties were lowered relatively to those from other Examples.

In Comparative Example 2 where the average particle diameter of the carbon-based active material particles was less than 5 µm, side reactions with the electrolyte solution were increased, and the life-span properties were deteriorated compared to those from Examples.

In Comparative Example 3 where the average particle diameter of the carbon-based active material particles exceeded 7.5 µm, the power properties were deteriorated compared to those from Examples.

In Comparative Example 4 where the BET specific surface area of the carbon-based active material particles was less than 3.0 m²/g, transfer paths of lithium ions were reduced, and the power were deteriorated compared to those from Examples.

In Comparative Example 5 where the BET specific surface area of the carbon-based active material particles exceeded 5.0 m²/g, side reactions with the electrolyte solution increased, and the life-span properties were deteriorated compared to those from Examples.

In Comparative Example 6 where the content of the propionate-based organic solvent was less than 55 vol% based on the total volume of the non-aqueous organic solvent, an ionic conductivity decreased, and the power properties were deteriorated compared to those from Examples.

## Claims

1. A lithium secondary battery, comprising:
an anode comprising an anode active material that contains carbon-based active material particles having a Brunauer-Emmett-Teller (BET) specific surface area of 3.0 m²/g to 5.0 m²/g and an average particle diameter (D50) of 5 µm to 7.5 µm;
a cathode facing the anode; and
a non-aqueous electrolyte solution comprising a non-aqueous organic solvent that contains a propionate-based organic solvent and a lithium salt,
wherein a content of the propionate-based organic solvent is 55 vol% or more based on a total volume of the non-aqueous organic solvent.

2. The lithium secondary battery according to claim 1, wherein the cathode comprises:
a cathode current collector; and
a cathode active material layer disposed on at least one surface of the cathode current collector, wherein the cathode active material layer comprises lithium-transition metal oxide particles having an average particle diameter (D50) of 2.5 µm to 3.5 µm.

3. The lithium secondary battery according to claim 2, wherein the lithium-transition metal oxide particles have a BET specific surface area of 1.0 m²/g to 1.7 m²/g.

4. The lithium secondary battery according to claim 2 or claim 3, wherein the cathode active material layer further comprises maleic acid, and a content of maleic acid is in a range from 0.02 wt% to 0.05 wt% based on a total weight of the cathode active material layer.

5. The lithium secondary battery according to any one of claims 2 to 4, wherein the lithium-transition metal oxide particles contain nickel.

6. The lithium secondary battery according to any one of claims 1 to 5, wherein the carbon-based active material particles include at least one selected from the group consisting of artificial graphite, natural graphite and hard carbon.

7. The lithium secondary battery according to any one of claims 1 to 6, wherein the content of the propionate-based organic solvent is in a range from 55 vol% to 80 vol% based on the total volume of the non-aqueous organic solvent.

8. The lithium secondary battery according to any one of claims 1 to 7, wherein the propionate-based organic solvent includes at least one selected from the group consisting of methyl propionate, ethyl propionate and propyl propionate.

9. The lithium secondary battery according to any one of claims 1 to 8, wherein the non-aqueous organic solvent further includes at least one selected from the group consisting of a carbonate-based solvent, an ester-based solvent, an ether-based solvent, a ketone-based solvent, an alcohol-based solvent and an aprotic solvent.

10. The lithium secondary battery according to any one of claims 1 to 9, wherein the lithium salt includes at least one selected from the group consisting of lithium tetrafluoroborate (LiBF₄), lithium hexafluorophosphate (LiPF₆) and lithium difluorophosphate (LiPO₂F₂).

11. The lithium secondary battery according to any one of claims 1 to 10, wherein the non-aqueous electrolyte solution further comprises an additive including at least one selected from the group consisting of an alkyl sultone-based compound and an alkenyl sultone-based compound.

12. The lithium secondary battery according to claim 11, wherein the additive further includes at least one selected from the group consisting of polyethylene sulfide, vinylene carbonate, vinylethylene carbonate and ethylene sulfate.
